(19) Europäisches Patentamt / European Patent Office / Office européen des brevets

(11) **EP 2 550 663 B1**

(12) **FASCICULE DE BREVET EUROPEEN**

(45) Date de publication et mention de la délivrance du brevet:
**13.01.2016  Bulletin 2016/02**

(21) Numéro de dépôt: **11710183.2**

(22) Date de dépôt: **22.03.2011**

(51) Int Cl.:
*G21F 7/015* (2006.01)          *G21D 1/00* (2006.01)

(86) Numéro de dépôt international:
**PCT/EP2011/054325**

(87) Numéro de publication internationale:
**WO 2011/117228 (29.09.2011 Gazette 2011/39)**

(54) **SYSTEME MOBILE D'INTERVENTION EN AMBIANCE DE GAZ RADIOACTIF, NOTAMMENT DE TRITIUM**

MOBILES SYSTEM ZUR INTERVENTION IN EINER ATMOSPHÄRE MIT RADIOAKTIVEM GAS, IM BESONDEREN TRITIUM

MOBILE SYSTEM FOR INTERVENTION IN ATMOSPHERE OF RADIOACTIVE GAS, PARTICULARLY TRITIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.03.2010  FR 1052080**

(43) Date de publication de la demande:
**30.01.2013  Bulletin 2013/05**

(73) Titulaire: **Commissariat à l'Énergie Atomique et aux Énergies Alternatives 75015 Paris (FR)**

(72) Inventeurs:
• **GUILLEMANT, Olivier F-21700 Saint Bernard (FR)**
• **DACLIN, Jean-Pierre F-21380 Messigny et Vantoux (FR)**

(74) Mandataire: **Ilgart, Jean-Christophe et al BREVALEX 95, rue d'Amsterdam 75378 Paris Cedex 8 (FR)**

(56) Documents cités:
**EP-A1- 0 307 284**

• **"Le traitement de l'air dans l'industrie nucléaire", Brochure DELTA NEU , septembre 2009 (2009-09), pages 1-4, XP002608769, France Extrait de l'Internet: URL:http://www.delta-neu.com/pdf/presences /Nucleaire.pdf [extrait le 2010-11-09]**
• **ANA ET AL.: "Tritium measurement systems used in the detritiation experimental pilot plant from Rm. Valcea", Proceedings of the 9th WSEAS/IASME International Conference on ELECTRIC POWER SYSTEMS, HIGH VOLTAGES, ELECTRIC MACHINES , 2009, pages 46-50, XP002608768, ISBN: 978-960-474-130-4 Extrait de l'Internet: URL:http://www.wseas.us/e-library/ conferen ces/2009/genova/POWER/POWER-06.pdf [extrait le 2010-11-09]**
• **D. Leterq et al.: "Retour d'expérience du procédé de détritiation de Valduc", CEA , 24 septembre 2009 (2009-09-24), pages 1-22, XP002608767, Extrait de l'Internet: URL:http: //www.sfrp.asso.fr/IMG/pdf/16-DLe terq.pdf [extrait le 2010-11-09]**
• **RIZZELLO ET AL.: "Review of tritium confinement and atmosphere detritiation system in hot cells complex", FUSION ENGINEERING AND DESIGN, vol. 85, janvier 2010 (2010-01), pages 58-63, XP002608770, Switzerland ISSN: 0920-3796**
• **'Mémento de la radioprotection en exploitation', [en ligne] 2004, pages 1 - 276 EDF Extrait de l'Internet: <URL:http://www.pompiers-risquestechno.fr/i mages/stories/rad/ mementorp.pdf> [extrait le 2014-09-22]**

**Description**

DOMAINE TECHNIQUE

La présente invention concerne un système mobile d'intervention en ambiance de gaz radioactif, notamment de tritium.

Elle s'applique tout particulièrement aux interventions de maintenance et d'assainissement dans une ambiance de tritium.

Les interventions sur les barrières de confinement, qui sont mises en oeuvre dans les installations manipulant du tritium, engendrent un risque important de dissémination de ce radioélément et de contamination des personnes qui réalisent l'intervention. En effet, le tritium est très volatil.

Ainsi, il y a lieu de mettre en place des protections individuelles et collectives pour ces personnes, afin de minimiser les risques d'exposition externe.

Généralement, une barrière amovible est mise en place afin de reconstituer partiellement une fonction de confinement statique. Cette barrière amovible est une paroi solide qui est constituée de films plastiques ou d'éléments assemblés démontables.

Un système de démantèlement d'installations dans un local est décrit par example en EP-A1-0 307284.

Le système, objet de l'invention, complète cette barrière amovible en lui adjoignant une fonction d'extraction contrôlée de l'air qui est contenu dans la zone d'intervention et éventuellement chargé de gaz radioactif, tout en maintenant la zone d'intervention en légère dépression par rapport à l'extérieur de cette zone.

Cette fonction d'extraction contrôlée, avec maintien d'une légère dépression, est communément appelée confinement dynamique.

Ce confinement dynamique, associé à la barrière qui est mise en place, crée un gradient de pression favorable au transfert du tritium dans un sens privilégié. Le tritium est alors généralement évacué de la zone d'intervention vers une canalisation de ventilation faisant partie de l'installation où se trouve la zone d'intervention.

Lors d'une intervention, on reconstitue ainsi les conditions optimales du fonctionnement nominal de l'installation.

Indiquons dès à présent que la présente invention associe, à la fonction de confinement dynamique, différents équipements permettant d'assurer non seulement la surveillance des conditions de l'intervention mais aussi la détection de la défaillance d'un élément. Les opérateurs qui réalisent l'intervention sont ainsi prévenus, *in situ*, d'une quelconque dégradation des conditions dans lesquelles ils réalisent cette intervention.

**ÉTAT DE LA TECHNIQUE ANTÉRIEURE**

Certaines opérations de maintenance ou de démantèlement nécessitent la dégradation de la fonction de confinement d'installations où l'on manipule du tritium.

Ces opérations consistent, par exemple, en l'ouverture d'enceintes étanches, de portions de canalisations ou de conteneurs.

Elles sont réalisées dans une ambiance où la contamination atmosphérique radioactive peut être importante, notamment quand la mise en place d'une protection contre la dissémination de poussières est implantée dans la zone d'intervention. De ce fait, ces opérations peuvent être rapidement pénalisantes pour les opérateurs, en termes de dosimétrie.

Généralement, une intervention est réalisée dans un local ventilé, dont l'ambiance est contrôlée pour en connaître la teneur en tritium. Toutefois, la zone de rejet du tritium dans l'air peut être très localisée, voire ponctuelle ; de plus, la dilution dans l'atmosphère du local et la détection de l'activité qui est due au tritium ne sont pas immédiates et peuvent conduire à une contamination de l'opérateur qui réalise l'intervention, par inhalation ou transfert percutané.

De façon à éviter une contamination surfacique de locaux ou d'équipements par des poussières extrêmement fines dont l'activité massique en tritium est très importante, la mise en place d'une protection amovible sur le lieu d'une opération est quasiment systématique. Cette protection *in situ*. empêche la dilution du tritium par diffusion et sa détection à l'aide de dispositifs permanents qui équipent les locaux.

Par ailleurs, des dispositifs de confinement dynamique ainsi que des dispositifs de surveillance et de signalisation existent dans le commerce, mais sans réelle cohérence entre eux. De plus, ces dispositifs commercialement disponibles ne disposent pas d'une fonction de sécurité intrinsèque.

**EXPOSÉ DE L'INVENTION**

La présente invention a pour but de remédier à ces inconvénients. Elle concerne un système modulaire et autonome, permettant d'assurer une sécurité optimale des opérateurs lors d'opérations de déconfinement de circuits ou déchets triés.

Selon un mode de réalisation préféré, ce système assure les fonctions suivantes de façon cohérente : une fonction de ventilation au moyen d'un ventilateur autonome, une fonction de mesure permanente de l'activité volumique du tritium à l'aide d'une chambre d'ionisation, et une fonction de signalisation sonore et lumineuse qui est déportée dans la zone d'intervention.

Le ventilateur autonome est pourvu d'un dispositif de filtration et de réglage du débit à l'aide d'un registre ; le refoulement du ventilateur est raccordable au réseau de ventilation générale du local où l'on installe le système, au moyen de dispositifs adaptables ; la mesure du débit d'extraction est réalisée en permanence, et des seuils paramétrables sont surveillés.

La chambre d'ionisation est pourvue d'un dispositif de type Venturi pour prélever des échantillons gazeux dans le flux de ventilation, et d'un dispositif pour contrôler en permanence la validité de la mesure en surveillant le débit ; en outre, l'enregistrement des variables mesurées et leur traitement numérique sont réalisés.

La connaissance de la concentration en tritium en fonction du temps permet de connaître la dose absorbée par chaque opérateur qui a fait l'intervention.

De façon précise, la présente invention a pour objet un système d'intervention en ambiance de gaz radioactif, notamment de tritium, ce système comprenant :

- un dispositif de confinement dynamique, comprenant :

  • une barrière amovible de confinement, apte à entourer une zone d'intervention, et
  • un dispositif d'extraction contrôlée d'air, apte à maintenir la zone d'intervention en dépression par rapport à l'extérieur de cette zone, caractérisé en qu'il comprend en outre :

- un dispositif de surveillance, pour surveiller la concentration en gaz radioactif dans l'air de la zone d'intervention, et
- un dispositif de détection et de signalement, pour détecter le dépassement d'un seuil prédéfini par cette concentration, et pour signaler le dépassement à la ou les personnes qui sont présentes dans la zone d'intervention, dans lequel le dispositif de surveillance comprend un dispositif de mesure de l'activité volumique du gaz radioactif, comprenant:

  - une chambre d'ionisation, et
  - un dispositif pour faire circuler des échantillons de l'air extrait, dans la chambre d'ionisation, le système comprenant en outre un dispositif de mesure du débit d'air dans la chambre d'ionisation, pour contrôler en permanence la validité de la mesure de l'activité volumique du gaz radioactif.

Selon un mode de réalisation préféré du système, objet de l'invention, le dispositif d'extraction contrôlée d'air comprend :

- un dispositif de filtration, pour filtrer les poussières susceptibles de se trouver dans l'air que l'on extrait de la zone d'intervention,
- un dispositif de réglage, pour régler le débit de l'air que l'on extrait, et
- un dispositif de ventilation.

De préférence, le système comprend en outre un dispositif de mesure du débit de l'air que l'on extrait.

Le dispositif pour faire circuler les échantillons dans la chambre d'ionisation comprend de préférence :

- un premier dispositif de type Venturi pour prélever les échantillons, et

- un deuxième dispositif de type Venturi pour restituer les échantillons prélevés.

De préférence, ce dispositif comprend en outre :

- une turbine pour augmenter la circulation des échantillons dans la chambre d'ionisation, et
- un dispositif de réglage du débit des échantillons prélevés.

## BRÈVE DESCRIPTION DES DESSINS

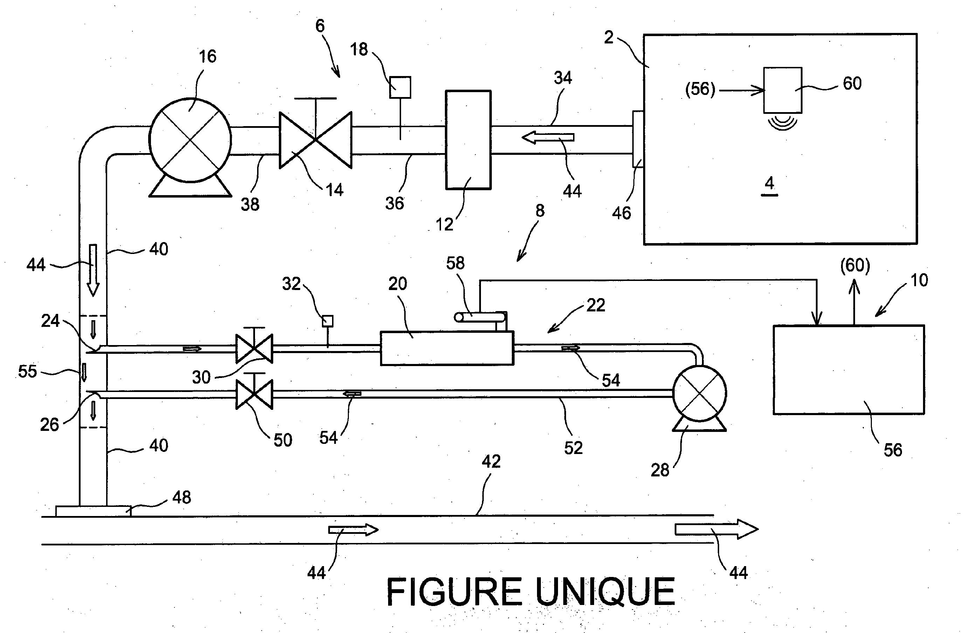

La présente invention sera mieux comprise à la lecture de la description d'exemples de réalisation donnés ci-après, à titre purement indicatif et nullement limitatif, en faisant référence à la figure unique annexée qui est une vue schématique d'un mode de réalisation particulier du système, objet de l'invention.

## EXPOSÉ DÉTAILLÉ DE MODES DE RÉALISATION PARTICULIERS

L'exemple de l'invention, qui est schématiquement illustré par la figure annexée, est un système d'intervention en ambiance de tritium.

Ce système comprend un dispositif de confinement dynamique, comprenant :

- une barrière amovible de confinement 2, apte à entourer une zone d'intervention 4 (enceinte ou zone de travail), et
- un dispositif d'extraction contrôlée d'air 6, apte à maintenir la zone d'intervention 4 en dépression par rapport à l'extérieur de cette zone.

Le système représenté sur la figure annexée comprend aussi :

- un dispositif de surveillance 8, pour surveiller la concentration en tritium dans l'air de la zone d'intervention 4, et
- un dispositif de détection et de signalement 10, pour détecter le dépassement d'un seuil prédéfini par cette concentration, et pour signaler le dépassement à la ou les personnes qui sont présentes dans la zone d'intervention 4.

Le dispositif d'extraction contrôlée d'air 6 comprend :

- un dispositif de filtration 12, pour filtrer des poussières susceptibles de se trouver dans l'air que l'on extrait de la zone d'intervention 4,
- un dispositif de réglage 14, pour régler le débit de l'air que l'on extrait, et
- un dispositif de ventilation 16.

Dans l'exemple, le dispositif 12 est un dispositif de filtration de poussières de très haute efficacité ; le dispositif de réglage 14 est un registre de réglage, permettant de régler le débit d'air selon le volume de la zone 4 (par exemple le volume de l'enceinte) et selon le renouvellement souhaité de l'air ; et le dispositif de ventilation 16 est une turbine d'extraction.

Le système représenté sur la figure annexée, comprend en outre un dispositif 18 de mesure du débit de l'air que l'on extrait.

Le dispositif de surveillance 8 comprend un dispositif de mesure de l'activité volumique du tritium, comprenant :

- une chambre d'ionisation 20 (chambre d'ionisation à circulation), et
- un dispositif 22 pour faire circuler des échantillons de l'air extrait, dans la chambre d'ionisation 20, avec un débit qui, dans l'exemple, vaut au moins 2,5 m$^3$ par heure.

Le dispositif 22 pour faire circuler les échantillons dans la chambre d'ionisation 20 comprend. un premier dispositif 24 de type Venturi pour prélever les échantillons, et un deuxième dispositif 26 de type Venturi pour restituer les échantillons prélevés.

Le dispositif 22 pour faire circuler les échantillons comprend en outre : une turbine d'extraction 28 pour augmenter la circulation des échantillons dans la chambre d'ionisation 20, et un dispositif 30 (une vanne dans l'exemple) pour régler le débit des échantillons prélevés.

La chambre d'ionisation 20 est de préférence munie, à son entrée, d'un dispositif (non représenté) pour chauffer les échantillons de l'air qui lui parviennent, notamment pour éviter des perturbations des mesures, dues à la présence d'humidité dans l'air.

Le système représenté sur la figure annexée comprend en outre un dispositif 32 de mesure du débit d'air dans la chambre d'ionisation 4.

Le système représenté sur la figure annexée est pourvu d'un circuit d'extraction d'air qui est constitué à partir de gaines souples 34, 36, 38 et 40. Ce circuit permet d'extraire l'air de la zone 4 et de l'envoyer dans une canalisation de ventilation 42 (réseau d'extraction). Les flèches 44 indiquent le sens de circulation de l'air dans le circuit.

Comme on le voit, ce circuit est relié, d'un côté, à la zone 4 par l'intermédiaire d'un dispositif 46 de passage ou de raccordement de la gaine souple 34, dont est pourvue la barrière amovible de confinement, et, d'un autre côté, à la canalisation 42 par l'intermédiaire d'une bride étanche 48 dont cette canalisation est pourvue.

Dans le circuit, à partir du dispositif de passage ou de raccordement 46, on trouve successivement le filtre 12, le registre 14 et la turbine 16. La gaine 34 relie le dispositif de passage ou de raccordement 46 au filtre 12 ; la gaine 36 relie le registre 14 au filtre 12 ; la gaine 38 relie la turbine 16 au registre 14 ; et la gaine 40 relie la bride 48 à la turbine 16.

En outre, le dispositif de mesure de débit 18 est monté sur la gaine 36.

Par ailleurs, le dispositif pour faire circuler les échantillons 8 comprend successivement le dispositif de type Venturi 24, la vanne 30, la chambre 20, la turbine 28, une autre vanne de réglage 50 et l'autre dispositif de type Venturi 26.

Ces constituants du dispositif 8 sont reliés les uns aux autres par des canalisations telles que la canalisation 52. Le sens d'écoulement des échantillons d'air prélevés est symbolisé par des flèches 54.

On voit aussi que les dispositifs 24 et 26 sont « insérés » dans la gaine souple 40.

Plus précisément, la gaine souple 40 est en deux parties et les dispositifs sont montés dans un manchon métallique 55 par l'intermédiaire duquel les deux parties se raccordent l'une à l'autre.

Ainsi, les échantillons d'air sont prélevés dans la gaine 40, par l'intermédiaire du dispositif 24, et y retournent par l'intermédiaire du dispositif 26.

En outre, le dispositif de mesure de débit 32 est monté sur la canalisation qui relie la chambre 20 à la vanne 30.

Le dispositif de détection et de signalement 10 comprend des moyens électroniques 56 de traitement du courant électrique qui est fourni par la chambre d'ionisation 20, pour déterminer la concentration du tritium dans l'air. Toutefois, avant traitement, le courant est amplifié par un préamplificateur 58.

En effet, ce courant, dû à la désintégration du tritium, est faible, de l'ordre de 10$^{-15}$ A à 10$^{-10}$ A, et doit être amplifié avant d'être traité dans les moyens 56 (qui sont pourvus d'un amplificateur (non représenté)).

Le dispositif 10 est pourvu de moyens de signalisation 60. Ces moyens 60 sont placés dans la zone d'intervention 4 et sont prévus pour informer, par un signal sonore et lumineux, le ou les opérateurs qui travaillent dans cette zone, lorsque la concentration en tritium dans l'air de la zone 4 dépasse une valeur prédéfinie.

Dans ce qui suit, on donne des précisions sur les divers constituants du système représenté sur la figure annexée.

Revenons d'abord sur le ventilateur autonome (turbine) 16, associé au dispositif de filtration 12.

L'aspiration, par l'intermédiaire de gaines souples en amont de ce ventilateur, permet de collecter les sources de tritium au plus près, même dans des zones complètement isolées. Le débit d'aspiration peut être réglé par l'intermédiaire du registre 14.

A titre purement indicatif et nullement limitatif, on utilise un ventilateur ayant les caractéristiques suivantes : 2760 tours par minute - 3A - 0,18 kW - 13 kg - deux vitesses ; et le débit vaut 700 m$^3$ par heure.

En pratique, afin d'éviter l'accumulation du tritium dans la zone de travail et d'assurer une faible dépression favorable à la non-dissémination de substances radioactives, la valeur de renouvellement horaire de l'air dans la zone 4, pour la fonction de confinement dynamique, évolue entre 10 et 15 (10 à 15 renouvellements de l'air de la zone par heure).

Une valeur égale à 15 est retenue pour les zones où sont présents des liquides tritiés.

Le ventilateur permet donc la couverture d'un volume allant jusqu'à 50 m$^3$.

Le dispositif 18 de mesure du débit est un capteur à fil chaud. Il est associé à un indicateur sur lequel les résultats des mesures sont reportés et des seuils de débit sont indiqués.

A titre purement indicatif et nullement limitatif, ce capteur est un capteur thermique à résistance en nickel ; il a une longueur de 120 mm ; la tige que comporte ce capteur a un diamètre égal à 10 mm ; l'étendue de mesure du capteur va de 0,2 m/s à 200 m/s ; la gamme de mesure du capteur va de 0 m$^3$/h à 700 m$^3$/h ; et le capteur a une sortie analogique qui va de 4 mA à 20 mA.

Le dispositif de filtration 12 permet d'éviter la dissémination, en dehors de la zone d'intervention, de poussières qui sont générées lors de l'intervention (par exemple à cause de découpes ou de remises en suspension) et sont potentiellement très contaminées.

A titre purement indicatif et nullement limitatif, le dispositif de filtration 12 comprend quatre filtres en papier et fibres de verre dans un caisson ; son efficacité à l'uranine est supérieure à 99,98% ; le delta P nominal de ce filtre vaut 250 m$^3$/h/Pa ; et la température maximale supportée par le filtre vaut 200°C.

En aval du ventilateur 16, le manchon métallique 55, muni des dispositifs de prélèvement et refoulement de type Venturi 24 et 26, assure une, différence de pression nécessaire à la circulation de l'air et du tritium dans le dispositif de mesure 8 qui est pourvu de la chambre d'ionisation 20.

Les liaisons entre les différents constituants de la chaîne de ventilation sont assurées par les gaines souples, mentionnées plus haut.

A titre purement indicatif et nullement limitatif, on utilise des gaines SEMA, en tissu polyester enduit de PVC, de 0,6 mm d'épaisseur ; elles sont renforcées par des spires en acier cuivré, fournies par la société ISOTEC.

On donne maintenant des précisions sur la chaîne de mesure et de détection du tritium.

Dans l'exemple, la chambre d'ionisation 20 est de type GCC 80 EVP et a un volume utile de 10 litres.

Une particule β$^-$ est émise lors de la désintégration du tritium. Cette particule cède son énergie au milieu ambiant en y créant des paires ion-électron. Les ions et les électrons sont collectés sur deux électrodes (non représentées) que comporte la chambre 20 (chambre de mesure) où l'on a établi une tension de polarisation de 300 V. On génère ainsi un courant dont l'intensité I est directement proportionnelle à la concentration volumique en tritium.

La forme oxydée du tritium (HTO) étant la plus pénalisante en termes de dosimétrie (elle est plus contaminante que la forme HT pour un opérateur), nous prenons cette forme comme valeur opérationnelle. En d'autres termes, les calculs sont faits sur cette forme HTO.

L'intensité I est donnée par la formule suivante :

$$I = C x V x 10^{-3} x E x \frac{1}{W} x 1,6 x 10^{-19}$$

Dans cette formule, I représente l'intensité du courant d'ionisation, exprimée en ampères, et C la concentration du tritium dans l'air, exprimée en Bq.m$^{-3}$.

Toutefois, conformément à des règles générales de radioprotection du Commissariat à l'Energie Atomique, les limites opérationnelles sont maintenant exprimées à l'aide d'une unité qui est notée RCA$_{eau\ tritiée}$.

Pour un radionucléide donné, une RCA correspond à l'activité volumique moyenne, en Bq.m$^{-3}$, qui conduit à une dose efficace engagée de 25 μSv en une heure de présence. Et 1 RCA$_{eau}$ tritiée est égal à 7, 72x10$^5$ Bq. m$^{-3}$.

En outre, dans la formule :

V représente le volume de la chambre d'ionisation, exprimé en dm$^3$ ;
E représente l'énergie moyenne du spectre β$^-$ du tritium ; elle est exprimée en eV et vaut 5,7x10$^3$ eV ;
W représente l'énergie qui est nécessaire pour former une paire d'ions dans l'air ; elle est exprimée en eV et vaut 33,7 eV ;
1,6x10$^{-19}$ représente la charge de l'électron, exprimée en coulombs.

Le courant considéré est faible. On l'amplifie à l'aide du préamplificateur 58. Ce dernier est associé à un amplificateur en vue de convertir ce courant en une valeur d'activité volumique du tritium (en Bq/m$^3$).

Le préamplificateur 58 est directement monté sur la chambre 20 (détecteur) et assuré :

- l'élaboration de la tension d'ionisation,
- l'acquisition et la numérisation du courant d'ionisation, et
- la communication avec les moyens de mesure (dispositif 10).

L'amplificateur (non représenté) est un amplificateur DT137T dans l'exemple décrit. Il permet un affichage local de la valeur mesurée (valeur de I, convertie en RCA) et son traitement :

- pour informer les utilisateurs d'un dépassement de seuils paramétrables, et
- pour effectuer des cumuls par intégration.

Les principales caractéristiques de cet amplificateur sont les suivantes :

- température d'utilisation : -10°C à 40°C ;
- alimentation électrique : 220 V-50 Hz-100 W ;
- étendue de mesure : de $10^{-1}$ LPCA à $10^{11}$ LPCA (LCPA : limite pour concentration admissible) ;
- choix d'unités d'activité volumique : RCA, LDCA, LPCA, CMA, $Ci/m^3$, $Bq/m^3$ (RCA : repère en concentration atmosphérique ; LDCA : limite de concentration admissible ; CMA : concentration maximale autorisée) ;
- choix des unités d'activité : Ci, Bq ; indication locale par un afficheur graphique LCD -240 x 64 points ;
- clavier à membrane étanche de quatre touches ;
- sorties analogiques : 0/10 VDC ;
- entrée/sortie numérique: RS232C ;
- alarmes de dépassement de seuil : un contact inverseur 5 A/250 V ;
- alarme de défaut d'état : un contact inverseur 5 A/250 V ;
- précision : ± 0,3% de la mesure ;
- sensibilité : 0,002 LPCA ;
- stabilité : ± 0,1% de la mesure ;
- répétitivité : ± 0,1% de la mesure ; et
- temps de réponse : inférieur à 10 s pour 100% de variation.

Dans le dispositif 10, un enregistreur numérique (non représenté) permet d'archiver les valeurs d'activité volumique qui sont générées par l'amplificateur DT137T. Les valeurs de débit d'extraction sont aussi mémorisées et permettent, après intégration, de comptabiliser le bilan de l'intervention en termes de rejets, ainsi que le bilan dosimétrique.

Cet enregistreur est pourvu de dispositifs de stockage USB amovibles et permet un enregistrement sur 320 jours.

La turbine 28 permet d'assurer la circulation de l'air contaminé dans la chambre d'ionisation, en complément de la différence de pression qui est créée par le dispositif de type Venturi décrit précédemment.

Le débit de l'air qui traverse la chambre d'ionisation est réglé par la vanne 30, à laquelle s'ajoute la vanne 50 dans l'exemple.

Ce débit est supérieur ou égal à 2,5 $m^3/h$. Il est contrôlé en permanence par le dispositif 32 qui, dans l'exemple, est un capteur à fil chaud pourvu d'une alarme.

A titre purement indicatif et nullement limitatif, ce capteur a les caractéristiques suivantes :

- il comporte une résistance en nickel ;
- il a une longueur de 120 mm ;
- son étendue de mesure va de 0,2 m/s à 200 m/s ;
- la tige qu'il comporte a un diamètre de 10 mm ;
- sa gamme de mesure va de 0 $m^3/h$ à 50 $m^3/h$ ; et
- il est pourvu d'une sortie analogique allant de 4 mA à 20 mA.

Les moyens 60 permettent une signalisation qui est déportée dans la zone de travail. Ils sont pourvus d'une ampoule flash et d'un buzzer pour avoir une signalisation à la fois sonore et lumineuse.

En cas de dépassement de seuil, les opérateurs sont ainsi immédiatement informés du risque de contamination sur le lieu de l'opération. Ils peuvent alors prendre toutes les dispositions nécessaires pour se mettre en sécurité et ce dans des délais extrêmement brefs.

Le système que l'on a décrit permet d'associer trois modules que l'on peut déployer indépendamment les uns des autres sur le lieu d'une intervention au cours de laquelle il existe un risque de contamination par le tritium.

Il permet eh effet la prévention du risque de contamination par le tritium (par inhalation ou par transfert percutané), en favorisant la dilution dans l'air et l'évacuation du tritium.

Il permet en outre la détection rapide d'une montée en contamination par le tritium au plus près du point de rejet, permettant ainsi aux opérateurs de se mettre en sécurité.

De plus, le type de signalisation qui est mis en oeuvre permet d'alerter les intervenants en toutes circonstances (bruit, étincelles, projections).

De par sa modularité et le choix des éléments qui le composent, le système est adaptable à de nombreuses circonstances, avec un très haut niveau de sûreté .

- volumes variables,
- zone d'intervention exigüe,
- facilité de connexion (électrique et ventilation),
- prise en compte du principe de non dissémination, et
- système à sécurité intrinsèque, avec des détections associées aux différentes fonctions du système.

Dans l'invention, on assure la cohérence entre les équipements mis en oeuvre, notamment en reproduisant, avec un système amovible, des conditions de sûreté équivalentes à celles de dispositifs fixes d'une installation où l'on trouve du tritium (confinement dynamique, surveillance et détection, information des intervenants).

A l'issue des interventions, un bilan complet peut être réalisé en ce qui concerne la quantité de tritium mise en jeu et l'évolution de la concentration du tritium dans l'air. De plus, un retour d'expérience dosimétrique peut être capitalisé.

Dans l'exemple décrit, la signalisation est sonore et lumineuse mais dans d'autres exemples, elle pourrait être sonore ou lumineuse.

De plus, l'exemple donné concerne les interventions dans une ambiance de tritium. Mais il peut être adapté aux interventions dans une ambiance de gaz radioactif quelconque.

**Revendications**

1.  Système d'intervention en ambiance de gaz radioactif, notamment de tritium, ce système comprenant un dispositif de confinement dynamique (2, 6), comprenant :

    • une barrière amovible de confinement (2), apte à entourer une zone d'intervention (4), et
    • un dispositif d'extraction contrôlée d'air (6), apte à maintenir la zone d'intervention (4) en dépression par rapport à l'extérieur de cette zone,

    **caractérisé en ce qu'**il comprend en outre :

    - un dispositif de surveillance (8), pour surveiller la concentration en gaz radioactif dans l'air de la zone d'intervention (4), et
    - un dispositif de détection et de signalement (10), pour détecter le dépassement d'un seuil prédéfini par cette concentration, et pour signaler le dépassement à la ou les personnes qui sont présentes dans la zone d'intervention (4),

    dans lequel le dispositif de surveillance comprend un dispositif (8) de mesure de l'activité volumique du gaz radioactif, comprenant :

    - une chambre d'ionisation (20), et
    - un dispositif (22) pour faire circuler des échantillons de l'air extrait, dans la chambre d'ionisation (20),

    le système comprenant en outre un dispositif (32) de mesure du débit d'air dans la chambre d'ionisation (20), pour contrôler en permanence la validité de la mesure de l'activité volumique du gaz radioactif.

2.  Système selon la revendication 1, dans lequel le dispositif d'extraction contrôlée d'air (6) comprend :

    - un dispositif de filtration (12), pour filtrer les poussières susceptibles de se trouver dans l'air que l'on extrait de la zone d'intervention (4),
    - un dispositif de réglage (14), pour régler le débit de l'air que l'on extrait, et
    - un dispositif de ventilation (16).

3.  Système selon la revendication 2, comprenant en outre un dispositif (18) de mesure du débit de l'air que l'on extrait.

4.  Système selon l'une quelconque des revendications 1 à 3, dans lequel le dispositif (22) pour faire circuler les échantillons dans la chambre d'ionisation (20) comprend :

    - un premier dispositif de type Venturi (24) pour prélever les échantillons, et
    - un deuxième dispositif de type Venturi (26) pour restituer les échantillons prélevés.

5.  Système selon la revendication 4, dans lequel le dispositif (22) pour faire circuler les échantillons comprend en outre :

    - une turbine (28) pour augmenter la circulation des échantillons dans la chambre d'ionisation (20), et
    - un dispositif (30) de réglage du débit des échantillons prélevés.

6.  Système selon l'une quelconque des revendications 1 à 5, dans lequel le dispositif de détection et de signalement (10) comprend des moyens pour connaître la concentration en gaz radioactif en fonction du temps.

**Patentansprüche**

1.  System zur Intervention in einer Atmosphäre von radioaktivem Gas, insbesondere Tritium, wobei das System eine Vorrichtung zum dynamischen Abschirmen (2, 6) umfasst, welches umfasst:

    • eine abnehmbare Barriere zum Abschirmen (2), welche geeignet ist, eine Interventionszone (4) zu umgeben, und
    • eine Vorrichtung zur kontrollierten Luft-Extraktion (6), welche geeignet ist, die Interventionszone (4) im Unterdruck im Verhältnis zu dem Äußeren dieser Zone zu halten,

    **dadurch gekennzeichnet, dass** es zusätzlich umfasst:

    - eine Vorrichtung zum Überwachen (8), um die Konzentration an radioaktiven Gas in der Luft der Interventionszone (4) zu überwachen, und
    - eine Vorrichtung zum Erfassen und Anzeigen (10), um die Überschreitung einer Grenze, welche durch diese Konzentration vorbestimmt ist, zu erfassen, und um die Überschreitung der oder den Person(en), welche in der Interventionszone (4) anwesend sind, anzuzeigen,

    wobei die Vorrichtung zum Überwachen eine Vorrichtung (8) zum Messen der Aktivitätskonzentration des radioaktiven Gases umfasst, welche umfasst:

    - eine Ionisierungskammer (20), und
    - eine Vorrichtung (22) zum Zirkulieren der Proben der extrahierten Luft in die Ionisierungskammer (20),

wobei das System zusätzlich eine Vorrichtung (32) zum Messen des Luftdurchsatzes in der Ionisierungskammer (20) umfasst, um kontinuierlich die Gültigkeit der Messung der Aktivitätskonzentration des radioaktiven Gases zu überprüfen.

**2.** System nach Anspruch 1, wobei die Vorrichtung zur kontrollierten Luft-Extraktion (6) umfasst:

- eine Vorrichtung zum Filtern (12), um die Stäube zu filtern, welche sich in der Luft befinden können, welche aus der Interventionszone (4) extrahiert wird,
- eine Vorrichtung zum Einstellen (14), um den Durchsatz der Luft, welche extrahiert wird, einzustellen, und
- eine Entlüftungsvorrichtung (16).

**3.** System nach Anspruch 2, umfassend zusätzlich eine Vorrichtung (18) zum Messen des Durchsatzes der Luft, welche extrahiert wird.

**4.** System nach einem der Ansprüche 1 bis 3, wobei die Vorrichtung (22) zum Zirkulieren der Proben in der Ionisierungskammer (20) umfasst:

- eine erste Vorrichtung des Venturi-Typs (24), um die Proben aufzunehmen, und
- eine zweite Vorrichtung des Venturi-Typs (26), um die aufgenommenen Proben zurückzugeben.

**5.** System nach Anspruch 4, wobei die Vorrichtung (22) zum Zirkulieren der Proben zusätzlich umfasst:

- eine Turbine (28), um die Zirkulation der Proben in die Ionisierungskammer (20) zu erhöhen, und
- eine Vorrichtung (30) zum Einstellen des Durchsatzes der aufgenommenen Proben.

**6.** System nach einem der Ansprüche 1 bis 5, wobei die Vorrichtung zum Erfassen und Anzeigen (10) Mittel umfasst, um die Konzentration von radioaktivem Gas im Laufe der Zeit zu erfassen.

## Claims

**1.** A system for intervention in an atmosphere of radioactive gas, notably tritium, this system comprising a dynamic confinement device (2, 6), including:

• a removable confinement barrier (2), able to surround an intervention zone (4), and
• a controlled air extraction device (6), able to keep intervention zone (4) at a lower pressure than the exterior of this zone,

**characterized in that** it also comprises :

- a monitoring device (8), to monitor the radioactive gas concentration in the air of the intervention zone (4), and
- a detection and signalling device (10), to detect the exceedance of a predefined threshold by this concentration, and to signal the exceedance to the person or persons present in the intervention zone (4), in which the monitoring device includes a device (8) for measuring the volume activity of the radioactive gas, comprising :
- an ionisation chamber (20), and
- a device (22) to cause samples of the extracted air to flow in the ionisation chamber (20),

the system also including a device (32) for measuring the air flow rate in the ionisation chamber (20), for continuously controlling the validity of the measurement of the volume activity of the radioactive gas.

**2.** A system according to claim 1, in which the controlled air extraction device (6) includes:

- a filtration device (12), to filter any dust in the air which is extracted from the intervention zone (4),
- an adjustment device (14), to adjust the flow rate of the air which is extracted, and
- a ventilation device (16).

**3.** A system according to claim 2, also including a device (18) for measuring the flow rate of the air which is extracted.

**4.** A system according to any of claims 1 to 3, in which the device (22) to cause the samples to flow in the ionisation chamber (20) includes:

- a first device of the Venturi type (24) to extract the samples, and
- a second device of the Venturi type (26) to restore the extracted samples.

**5.** A system according to claim 4, in which the device (22) to cause the samples to flow also includes:

- a turbine (28) to increase the flow of the samples in the ionisation chamber (20), and
- a device (30) to adjust the flow rate of the extracted samples.

**6.** A system according to any of claims 1 to 5, wherein the detection and signalling device (10) comprises means for knowing the radioactive gas concentration as a function of time.

FIGURE UNIQUE

EP 2 550 663 B1

**EP 2 550 663 B1**

**RÉFÉRENCES CITÉES DANS LA DESCRIPTION**

**Documents brevets cités dans la description**

- EP 0307284 A1